(19) Europäisches Patentamt
European Patent Office
Office européen des brevets

(11) EP 4 316 634 A1

(12) EUROPEAN PATENT APPLICATION
published in accordance with Art. 153(4) EPC

(43) Date of publication:
**07.02.2024 Bulletin 2024/06**

(21) Application number: **21933308.5**

(22) Date of filing: **27.12.2021**

(51) International Patent Classification (IPC):
***B01D 71/82*** (2006.01) ***B01D 61/46*** (2006.01)
***B01D 69/12*** (2006.01) ***C08J 5/22*** (2006.01)

(52) Cooperative Patent Classification (CPC):
**B01D 61/46; B01D 69/00; B01D 69/02; B01D 69/12; B01D 71/26; B01D 71/30; B01D 71/82; C08J 5/22;** Y02E 60/50

(86) International application number:
**PCT/JP2021/048588**

(87) International publication number:
**WO 2022/201718 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 JP 2021051340**

(71) Applicant: **Astom Corporation**
**Tokyo 105-0003 (JP)**

(72) Inventors:
- **KINOSHITA, Maki**
  **Shunan-shi, Yamaguchi 745-8648 (JP)**
- **KISHINO, Masayuki**
  **Shunan-shi, Yamaguchi 745-8648 (JP)**
- **FUKUTA, Kenji**
  **Shunan-shi, Yamaguchi 745-8648 (JP)**

(74) Representative: **Kraus & Lederer Patentanwälte PartGmbB**
**Thomas-Wimmer-Ring 15**
**80539 München (DE)**

# (54) ANION EXCHANGE MEMBRANE, AND METHOD FOR PRODUCING SAME

(57) An anion exchange membrane includes an anion exchange resin layer 3 reinforced with a backing material sheet 5. The anion exchange resin layer 3 includes an anion exchange resin that has as an anion exchange group a pyridinium group formed by protonation of a pyridyl group, and a vinyl chloride resin as a thickener. The backing material sheet 5 is made of a polyethylene woven fabric.

Fig. 1

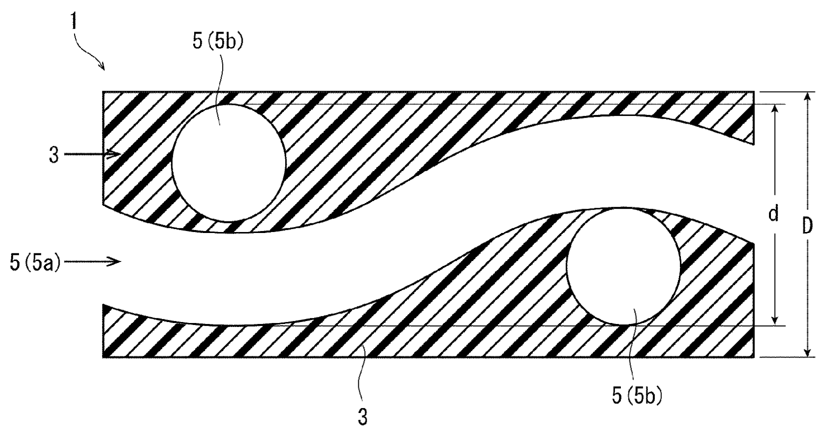


EP 4 316 634 A1

## Description

Technical Field:

The present invention relates to an anion exchange membrane having a protonated pyridinium group as an anion exchange group and a method for producing the same.

Background Art:

Anion exchange membranes are made of an anion exchange resin layer having as a core a backing material sheet that functions as a reinforcing member. In combination with cation exchange membranes and bipolar membranes, anion exchange membranes are widely used in applications such as electrodialysis for salt production, desalination, production of acid and alkali from neutral salt, and the like.

A known example of such an anion exchange membrane is an anion exchange membrane having a pyridinium group as an anion exchange group (hereinafter, may be referred to as a 4VP-based anion exchange membrane). A 4VP-based anion exchange membrane can be easily obtained by treating a precursor having a pyridyl group as a functional group with acid. In other words, placing a pyridyl group in an acidic environment immediately leads to the formation of a pyridinium group that acts as an anion exchange membrane. When such a 4VP-based anion exchange membrane is used in combination with a bipolar membrane and a cation exchange membrane for electrodialysis desalination, acid is concentrated with high efficiency (see Patent Document 1), because the anion exchange membrane serves to block the leakage of protons ($H^+$) produced in the bipolar membrane into a desalination compartment.

However, a 4VP-based anion exchange membrane has the disadvantage of shrinking in contact with water, which is presumably ascribed to the following reason. A 4VP-based anion exchange membrane serves as an ion exchange membrane by coordinating a proton to the N atom of a pyridine ring. Since pyridine has a low pKa value and is protonated just in an acidic environment, it is deprotonated in contact with water, releasing a proton, accompanied by counterion release and hydrated ion emission. This results in shrinkage of the entire membrane.

Further, the dimensional stability of a 4VP-based anion exchange membrane can be improved by using polyethylene powder as a thickener, however, the current efficiency of the membrane will be lowered and the water permeability of the membrane will also deteriorate, with result of other problems.

Prior Art Documents:

Patent Documents:

Patent Document 1: JP-A-5-184877

Summary of the Invention:

Problems to be solved by the Invention:

In light of the above, an object of the present invention is to provide a 4VP-based anion exchange membrane that the shrinkage in contact with water is suppressed and that has excellent dimensional stability, and a method for producing the same.

Another object of the present invention is to provide an anion exchange membrane having high current efficiency and good water permeability in addition to excellent dimensional stability, and a method for producing the same.

Means for solving the Problems:

The present invention provides an anion exchange membrane including an anion exchange resin layer reinforced with a backing material sheet. The anion exchange resin layer includes an anion exchange resin that has as an anion exchange group a pyridinium group formed by protonation of a pyridyl group, and a vinyl chloride resin as a thickener. The backing material sheet is made of a polyethylene woven fabric.

It is suitable for the anion exchange membrane (that is, the 4VP-based anion exchange membrane) of the present invention that:

(1) The vinyl chloride resin has an average degree of polymerization of 650 to 1,200;
(2) The vinyl chloride resin is contained in an amount of 5 to 25 mass% in the anion exchange membrane;
(3) The backing material sheet of the polyethylene woven fabric has a thickness of 120 to 160 μm;

(4) The backing material sheet of the polyethylene woven fabric has an opening area of 35% to 55%;
(5) The membrane has a shrinkage ratio of not more than 2.3% after being immersed in a 0.5 N HCl aqueous solution, followed by immersion in pure water for three days; and
(6) The membrane has a current efficiency of not less than 55% and a water permeability of less than 1,000 ml/$m^2$·Hr.

The present invention further provides a method for producing an anion exchange membrane, including the following steps:

a step of preparing a polymerizable composition containing 4-vinylpyridine as a monomeric component and a vinyl chloride resin as a thickener;
a step of forming a polymerizable sheet by impregnating a backing material sheet of a polyethylene woven fabric with the polymerizable composition;
a step of winding the polymerizable sheet overlaid with a release sheet on a roll;
a step of carrying out polymerization by heating the polymerizable sheet wound on the roll to obtain a polymer sheet;
a step of peeling the release sheet from the polymer sheet to obtain an ion exchange membrane precursor; and
a step of protonating a pyridyl group by immersing the ion exchange membrane precursor in an acid solution to obtain an anion exchange membrane.

It is suitable for the production method of the present invention that the vinyl chloride resin is contained in the polymerizable composition so as to be present in the anion exchange membrane to be obtained in an amount of 5 to 25 mass%.

Effect of the Invention:

The anion exchange membrane of the present invention is a so-called 4VP-based anion exchange membrane, as can be understood from the fact that it includes an anion exchange resin that has a protonated pyridinium group as an anion exchange group. This anion exchange membrane is characterized in that it uses a specific backing material sheet (polyethylene woven fabric) and that a specific thickener (vinyl chloride resin) is distributed in an anion exchange resin layer. With these characteristics, the anion exchange membrane has excellent dimensional stability and its shrinkage in contact with water is effectively suppressed. For example, in Examples to be described below, the shrinkage ratios of membranes were measured (under conditions detailed in Examples) after the membranes were treated with a 0.5 N HCl aqueous solution and immersed in pure water for three days. As a result, a conventional 4VP-based anion exchange membrane (Comparative Example 1, using a backing material sheet of a polyvinyl chloride woven fabric and NBR as a thickener) had a shrinkage ratio of 2.8%, while the 4VP-based anion exchange membranes of the present invention (Examples 1 to 3) had a shrinkage ratio suppressed to approximately 1.4% to 2.3%. Further, the 4VP-based anion exchange membranes of the present invention were excellent in both current efficiency and water permeability, with a current efficiency of more than 55% and a water permeability of less than 1,000 ml/$m^2$·Hr.

As for membranes in Comparative Examples 2 and 3 using polyethylene powder, instead of a vinyl chloride resin, as a thickener, the shrinkage ratio was suppressed to as low as 1.0% to 1.1%. However, the current efficiency was as low as 54% or less, and the water permeability was more than 40,000 ml/$m^2$·Hr, which were both inferior to those in the present invention.

As described above, the 4VP-based anion exchange membrane of the present invention is excellent in not only dimensional stability but also current efficiency and water permeability. Thus, when used in combination with a cation exchange membrane and a bipolar membrane for electrodialysis, the 4VP-based anion exchange membrane is prevented from being broken due to dimensional change during the internal washing of a device and from being unable to be reinstalled due to dimensional change during the disassembly and reassembly of the device, whereby electrodialysis can be carried out stably for a long term. In particular, the 4VP-based anion exchange membrane is most suitably applied to electrodialysis for concentrating acid in combination with a bipolar membrane and a cation exchange membrane.

Brief Description of the Drawings:

[Fig. 1]: a schematic cross-sectional view showing the structure of a 4VP-based anion exchange membrane of the present invention.

Mode for Carrying Out the Invention:

<4VP-based anion exchange membrane>

Referring to Fig. 1, a 4VP-based anion exchange membrane of the present invention denoted as a whole by reference numeral 1 has a basic structure in which an anion exchange resin layer 3 is reinforced with a backing material sheet 5.

An anion exchange resin for use in the formation of the anion exchange resin layer 3 has a pyridinium group as an anion exchange group. More specifically, the anion exchange resin has repeating units of 4-vinylpyridine. As represented by the following formula, when a proton ($H^+$) is coordinated to the nitrogen atom of a pyridine ring, it acts as an anion exchange group.

[CF 1]

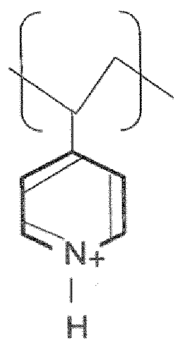

Since pyridine has a low Pka value of 5.25, a pyridyl group is protonated just in an acidic environment into pyridinium that acts as an anion exchange group. In a common anion exchange resin, a quaternary ammonium base formed by complete methylation of the nitrogen atom of an amino group acts as an anion exchange group. The anion exchange membrane of the present invention differs from a common quaternary ammonium salt-based anion exchange membrane in that it does not require a complicated treatment or reaction for the formation of the anion exchange group.

As described above, 4VP-based anion exchange membranes have the disadvantage of shrinking considerably in contact with water. This is because while protonation occurs easily by acid, deprotonation occurs easily by contact with water (or at increased pH), which is accompanied by counterion release and hydrated ion emission.

In order to overcome this disadvantage, the present invention uses a vinyl chloride resin served as a thickener, which is dispersed in the anion exchange resin layer 3, and a polyethylene woven fabric as the backing material sheet 5. This woven fabric is formed by interweaving a warp yarn 5a with a weft yarn 5b as shown in Fig. 1. The fabric may be any of a plain-woven fabric, a twill fabric, and a sateen fabric, but is most suitably a plain-woven fabric for the purpose of, for example, in view of setting the opening area in a certain range.

It is known to use a vinyl chloride resin sheet as a backing material sheet of an ion exchange membrane. In the present invention, however, a vinyl chloride resin is used as a thickener, not for a backing material sheet, and is distributed in the anion exchange resin layer 3 in granular form (in other words, the vinyl chloride resin is not shaped as a sheet but dispersed in an island shape.) Further, the backing material sheet 5 is limited to a polyethylene woven fabric. This combination contributes to not only suppressing the membrane shrinkage as observed in a conventional 4VP-based anion exchange membrane, ensuring high dimensional stability, but also achieving excellent current efficiency and water permeability.

It is not yet exactly understood why the use of a vinyl chloride resin (thickener) and a polyethylene woven fabric in the present invention not only suppresses the membrane shrinkage but also improves current efficiency and water permeability. The present inventors presume as follows.

The thickener, which is used to increase the viscosity of a polymerizable composition (containing 4-vinylpyridine) for forming an anion exchange resin to such an extent that it is coatable on the backing material sheet (woven fabric), is contained in the polymerizable composition in powder or granular form. Thus, the thickener is dispersed in an island shape in the matrix (sea) of the anion exchange resin in the resultant anion exchange membrane (anion exchange resin layer 3). Vinyl chloride resin powder (PVC powder) for use as the thickener has a high affinity for monomers contained in the polymerizable composition and is easily impregnated with the monomeric components. Thus, it is considered that in the resultant ion exchange resin, the PVC powder is well spread such that voids are less likely to occur. In addition,

a polyethylene woven fabric itself for use as the backing material has high strength as compared with a porous film, a nonwoven fabric, or a vinyl chloride resin-based woven fabric and the like. Consequently, the combined use of a polyethylene woven fabric and vinyl chloride resin powder (PVC powder) results in a membrane having not only high dimensional stability (low shrinkage ratio) but also excellent current efficiency and water permeability.

For example, in the case of using polyethylene powder instead of vinyl chloride resin powder, dimensional stability is improved because the powder is not easily impregnated with the monomeric components. However, since the powder is difficult to mix with the monomeric components of the ion exchange resin, voids are likely to occur in the ion exchange resin, which results in unsatisfactory current efficiency and water permeability.

Further, in the case of using a vinyl chloride resin sheet or a polyolefin porous sheet for the backing material sheet, the resultant backing material sheet has a low reinforcing effect. In particular, a polyolefin porous sheet has such small openings that thickener particles do not penetrate into them, whereby the reinforcing effect to be exerted by the thickener is also hindered.

In the 4VP-based anion exchange membrane of the present invention, a vinyl chloride resin for use as the thickener desirably has an average degree of polymerization in a range of 650 to 1,200 for the purpose of ensuring coatability of the polymerizable composition in the production of the anion exchange membrane. The desirable range of the present invention is determined based on the fact that the lower the degree of polymerization of vinyl chloride, the higher the thickening effect; the higher the degree of polymerization, the lower the thickening effect. Further, in order to achieve the effect of suppressing membrane shrinkage without impairing the basic composition (such as the anion exchange capacity and the electric resistance) of the membrane, as well as to ensure coatability derived from thickening, the vinyl chloride resin is suitably present in the anion exchange membrane 1 in an amount of 5 to 25 mass%, in particular, 6 to 20 mass%.

A polyethylene woven fabric for use as the backing material sheet 5 of the present invention is suitably such that it does not cause an increase in electric resistance by the use of a vinyl chloride resin, while maintaining its strength.

For example, such a polyethylene woven fabric (backing material sheet 5) preferably has a thickness d in a range of 120 to 160 μm and an opening are in a range of 35% to 55%. As compared with various woven fabrics conventionally used as a backing material sheet, this woven fabric is considerably thin with a relatively large opening area. The diameter of a polyethylene monofilament yarn is relatively small in a range of approximately 60 to 80 pm.

With the backing material sheet 5 selected as described above, the 4VP-based anion exchange membrane 1 suitably has an electric resistance in a range of not more than 5.0 $\Omega \cdot cm^2$, more preferably in a range of not more than 4.5 $\Omega \cdot cm^2$, as measured in hydrochloric acid in a concentration of 0.5 mol/l at 25°C.

Further, the 4VP-based anion exchange resin layer 3 preferably has a thickness D in a range of approximately 100 to 200 μm in terms of strength and handleabitliy. Further, the 4VP-based anion exchange resin desirably has an anion exchange group (cationized pyridyl group) to be introduced in the resin in such a proportion as to ensure an ion exchange capacity of approximately 0.9 to 1.4 meq/g dry mass. If the anion exchange group is introduced in an excess amount, shrinkage ratio may be increased during deprotonation. If the anion exchange group is introduced in a smaller amount, sufficient ion exchange capacity is not exhibited.

The 4VP-based anion exchange membrane 1 of the present invention has a shrinkage ratio (dimensional change) of less than 2.5%, preferably less than 2.3%, a current efficiency of not less than 55%, preferably not less than 60%, and a water permeability of less than 1,000 $ml/m^2 \cdot Hr$, as demonstrated in Examples below. Further, the membrane has a water content of approximately 13% to 21% and a burst strength of approximately 1.0 to 1.1 MPa. Each of these parameters is measured in a manner described in Examples.

<Production of 4VP-based anion exchange membrane 1>

The above-described 4VP-based anion exchange membrane 1 of the present invention is produced through the steps of preparing a polymerizable composition, forming a polymerizable sheet, winding the sheet on a roll, carrying out polymerization, peeling a release sheet, and carrying out protonation.

Hereinafter, each of the steps will be described sequentially.

Step of preparing polymerizable composition:

This step is to prepare a polymerizable composition for obtaining a polymer (anion exchange resin precursor) that becomes the anion exchange resin by protonation.

As such, the composition needs to contain 4-vinylpyridine as a monomeric component. In addition to this, another monomer, a cross-linkable monomer and a polymerization initiator are contained to adjust the physical properties of the composition, because a composition containing only 4-vinylpyridine results in marked shrinkage.

4-vinylpyridine is a compound as a source of an anion exchange group; thus, it is contained in the polymerizable composition in such an amount that the aforementioned ion exchange capacity is obtained, e.g., in an amount of 15 to

35 parts by mass, in particular in an amount of 18 to 30 parts by mass, with respect to the total amount of 100 parts by mass of the polymerizable composition (which corresponds to 100 parts by mass of the anion exchange resin).

Examples of another monomer that is copolymerizable with 4-vinylpyridine can include styrene, vinyltoluene, vinylxylene, α-methylstyrene, vinylnaphthalene, and acrylonitrile.

In principle, conventionally used monomers having an anion exchange group are also available. Examples include nitrogen-containing vinyl compounds such as vinylimidazole, vinylbenzyltrimethylamine, and vinylbenzyltriethylamine.

The cross-linkable monomer is used to densify the anion exchange resin, to highly inhibit swelling, and to increase membrane strength, for example. Examples include, but are not limited to, the following divinyl compounds:

divinylbenzene,
divinyl sulfone,
butadiene,
chloroprene,
divinylbiphenyl,
trivinylbenzenes,
divinylnaphthalene,
diarylamine,
divinylpyridine,
1,2-bis(vinylphenyl)ethane,
ethylene glycol dimethacrylate, and
N,N-methylenebisacrylamide.

The cross-linkable monomer is usually used in an amount of 0.1 to 50 parts by mass, in particular in an amount of 1 to 40 parts by mass, with respect to the sum total of 100 parts by mass of the 4-vinylpyridine and another monomer copolymerizable therewith (hereinafter, referred to as a basic monomeric component.)

For the polymerization initiator, a conventionally known polymerization initiator may be used without particular limitation. Specific examples include organic peroxide-based polymerization initiators such as octanoyl peroxide, lauroyl peroxide, t-butylperoxy-2-ethylhexanoate, benzoyl peroxide, t-butylperoxyisobutyrate, t-butylperoxylaurate, t-hexylperoxybenzoate, and di-t-butylperoxide; and azo-based polymerization initiators such as azobisisobutyronitrile.

The polymerization initiator is contained preferably in an amount of 0.1 to 20 parts by mass, more preferably in an amount of 0.5 to 10 parts by mass, with respect to 100 parts by mass of the basic monomeric component.

The polymerizable composition of the present invention containing the above-described various components further contains a vinyl chloride resin as a thickener so as to maintain viscosity enough to be coatable without dripping, for example. The vinyl chloride resin, which suitably has the aforementioned average degree of polymerization, is used in powder or granular form. The average particle diameter, which varies due to heating for polymerization, and the like, does not coincide with the particle diameter of the vinyl chloride resin dispersed in the resultant anion exchange resin. For example, it is suitable that the 50% particle diameter ($D_{50}$) is in a range of 0.1 to 50 μm as measured in terms of volume by a laser diffraction scattering method. If the particle diameter is larger, it is difficult for the resin to enter the openings of the polyethylene woven fabric (backing material sheet 5), possibly resulting in a decrease in the membrane shrinkage suppressing effect. If the particle diameter is too small, both the handleability and the availability of the resin are reduced.

As mentioned above, the vinyl chloride resin as a thickener is used in such an amount (usually, in an amount of approximately 5 to 30 parts by mass with respect to 100 parts by mass of the polymerizable composition) as to be present in the anion exchange membrane 1 as a final product in an amount in a range of 5 to 25 mass%, in particular in a range of 6 to 20 mass%, so as to ensure appropriate coatability of the polymerizable composition.

In the present invention, a thickener other than the vinyl chloride resin can also be used in such a small amount as not to inhibit the membrane shrinkage suppressing effect of the vinyl chloride resin. Examples of such a thickener include the following:

saturated aliphatic hydrocarbon-based polymers such as an ethylene-propylene copolymer and polybutylene,
styrene-based polymers such as a styrene-butadiene copolymer,
various rubbers such as nitrile butadiene rubber, hydrogenated nitrile butadiene rubber, epichlorohydrin rubber, and chlorinated polyethylene rubber, and
copolymers of any of the aforementioned polymers with various comonomers (e.g., a styrene-based monomer such as vinyltoluene, vinylxylene, chlorostyrene, chloromethylstyrene, α-methylstyrene, α-halogenated styrene, or α,β,β'-trihalogenated styrene; a mono-olefin such as ethylene or butylene; and a conjugated diolefin such as butadiene or isoprene.)

Further, the polymerizable composition can also contain a moderate amount of plasticizer, as appropriate, to make a membrane-like product to be obtained after polymerization flexible. Examples of the plasticizer include phthalate esters such as dioctyl phthalate and dibutyl phthalate, adipate esters such as dioctyl adipate and diisononyl adipate, epoxies such as styrene oxide, and ethers such as diphenyl ether and dibenzyl ether.
The above-described respective components are mixed uniformly in a common fluid stirred tank with an impeller, thereby providing the polymeriazable composition.

Step of forming polymerizable sheet:

The polymerizable composition prepared as described above is applied to a polyethylene woven fabric as the backing material sheet 5 such that the openings of the woven fabric are filled with the polymerizable composition, thereby forming a polymerizable sheet. The polymerizable sheet is an original form of the anion exchange resin layer 3 in Fig. 1, in which the polyethylene woven fabric having a reinforcing effect is present as a core.
The method of applying the polymerizable composition to the polyethylene woven fabric is not particularly limited. Usually, brush coating, roll coating or the like is used to immerse the polyethylene woven fabric in the polymerizable composition. Spray coating and the like are also available. Alternatively, depending on the viscosity of the polymerizable composition, the application can also be performed by bringing the polymerizable composition into contact with the polyethylene woven fabric under reduced pressure.
The polymerizable sheet is thus formed such that its thickness (which is the thickness of the polymerizable composition applied) after polymerization and curing is equivalent to the thickness (approximately 100 to 200 $\mu$m) of the aforementioned anion exchange resin layer 3.

Step of winding sheet on roll:

The polymerizable sheet of the present invention formed as described above is overlaid with a release sheet and is wound on a roll together. The thus-obtained roll serves to enable efficient heating in the subsequent polymerization step. Heating of the polymerizable sheet as it is requires a large-sized oven, resulting in an increase in production cost, whereas heating of the sheet in a roll form requires only a compact oven.
Without the release sheet, layers of the polymerizable composition applied adhere to one another and clump together, whereby they cannot be wound on a roll.
Since the release sheet is non-essential for the anion exchange membrane, it is peeled off after polymerization. The release sheet can be made of any of various materials as long as it does not negatively affect the polymerization of the polymerizable composition and can be easily peeled off from the polymer. Usually, a polyethylene terephthalate (PET) film is used for reasons of availability.

Step of carrying out polymerization:

As understood from the description above, the roll of the polymerizable sheet overlaid with the release sheet is heated, thereby providing a polymer of the polymerizable composition.
The heating temperature and the like for polymerization are set in an appropriate range according to the monomeric component used in combination with the 4-vinylpyridine, the type of the polymerization initiator, and the like. Understandably, the heating temperature should be lower than the melting points of the polyethylene used for the backing material sheet 5 and the vinyl chloride resin used as a thickener, and it is usually set in a range of 70°C to 90°C.
Polymerization is carried out in an oven or the like and desirably under a nitrogen atmosphere, because polymerization carried out in an air atmosphere may be inhibited by oxygen in the air. The polymerization time, which varies according to the polymerization temperature and the like, is usually two to five hours.

Step of peeling release sheet:

After the polymerization, the roll is unrolled, and the release sheet is peeled off, thereby providing a polymer sheet as a result of polymerizing the polymerizable composition. The thus-obtained polymer sheet is referred to as an ion exchange membrane precursor.

Step of carrying out protonation:

This step is to coordinate a proton to the nitrogen atom of a pyridyl group of the ion exchange membrane precursor obtained above, thereby producing pyridinium that can act as an anion exchange group.
Usually, protonation, which is carried out by bringing the ion exchange membrane precursor into contact with

acid, can be easily performed by immersing the ion exchange membrane precursor in an acid solution.

Among various available acids, it is usually suitable to use hydrochloric acid, sulfuric acid, or phosphoric acid with an acid concentration of approximately 1 to 3 N.

After the completion of the protonation step, the resultant membrane is washed with water and cut to the proper size for use as an anion exchange membrane.

The thus-obtained 4VP-based anion exchange membrane 1 of the present invention is applicable to various types of electrodialysis. In particular, it is most suitably applied to an electrodialyzer in combination with a bipolar membrane and a cation exchange membrane to concentrate acid.

## Examples

Hereinafter, the present invention will be described in further detail with reference to Examples; however, the present invention is not limited to these examples.

The following description is directed to the backing material and the thickener used in Examples and Comparative Examples.

1) Backing material

Polyolefin-based woven fabric

High-density polyethylene monofilament woven fabric
(PE-33D-120 manufactured by NBC Meshtec. Inc.)

Warp yarn: diameter of 76 μm; 120 yarns per inch
(33 denier)
Weft yarn: diameter of 76 μm; 120 yarns per inch
(33 denier)
Thickness: 132 μm
Opening area: 41%

Polyvinyl chloride woven fabric
Trade name: V-7275, manufactured by TEIJIN LIMITED

Warp yarn: 274 μm; 86 yarns per inch (84 dtex)
Weft yarn: 213 μm; 73 yarns per inch (84 dtex)
Thickness: 86 μm
Opening area: 3%

2) Thickener

PVC powder

PQB-83 manufactured by SHINDAI-ICHI VINYL CORPORATION (Particle diameter: 10 to 50 μm; average degree of polymerization: 700)
P-22 manufactured by SHINDAI-ICHI VINYL CORPORATION (Particle diameter: 0.1 to 10 μm; average degree of polymerization: 1050)

PE powder

LE-1080 manufactured by Sumitomo Seika Chemicals Company, Limited.
(Particle diameter: 0.1 to 10 μm)
EA-209 manufactured by Sumitomo Seika Chemicals Company,

Limited.
(Particle diameter: 0.1 to 15 μm)
Other thickeners

H-NBR: hydrogenated nitrile butyl rubber

(Trade name: Zetpol 2000L, manufactured by Zeon Corporation)
NBR: nitrile butyl rubber
(Trade name: N230SH, manufactured by JSR Corporation)

Features of the ion exchange membranes in Examples and Comparative Examples were measured in the following manner.

<Opening area of filament backing material>

The opening area of the filament backing material was calculated from the diameter (μm) of yarns forming the backing material and mesh count according to Formula (1) below.

$$\text{Opening area (\%)} = (\text{opening})^2/(\text{opening} + \text{yarn diameter})^2 \cdots (1)$$

The parameters in Formula (1) are as follows:

$$\text{Opening (μm)} = 25400/\text{mesh count} - \text{yarn diameter (μm)};$$

and

$$\text{Mesh count} = \text{(average) number of yarns per inch.}$$

<Shrinkage ratio>

The ion exchange membrane was immersed in a 0.5 mol/L HCl aqueous solution for not less than 12 hours, followed by dimensional measurement of the ion exchange membrane ($L_0$).
Then, the ion exchange membrane was washed sufficiently with ion exchange water and immersed in ion exchange water for 72 hours, followed by dimensional measurement of the membrane ($L_1$). The shrinkage ratio was calculated according to Formula (2) below.

$$\text{Shrinkage ratio (\%)} = (1 - L_1/L_0) \times 100 \cdots (2)$$

<Current efficiency>

A two-compartment cell with the following structure was used:

Cathode (silver chloride plate)
(0.5 mol/L hydrochloric acid) / Anion exchange membrane / (3 mol/L hydrochloric acid)
Anode (silver plate).

At a solution temperature of 25°C, an electric current was applied at a current density of 10 A/dm$^2$ for one hour, followed by recovery of the cathode-side solution. The concentration of hydrochloric acid in each of the recovered solution and the initial solution was determined by using aqueous sodium hydroxide with a potential titrator (Auto Titrator manufactured by Kyoto Electronics Manufacturing Co., Ltd.) The current efficiency was calculated according to Formula (3) below.

$$\text{Current efficiency (\%)} = \{1 - (C_S - C_B)/(I \times t/F)\} \times 100 \cdots (3)$$

The parameters in Formula (3) are as follows:

$C_B$: Concentration in initial solution;

Cs: Concentration in solution recovered after current application;
I: Current value (A);
t: Duration of current application (sec); and
F: Faraday constant (96500 C/mol).

<Burst strength of ion exchange membrane>

The ion exchange membrane was immersed in a 0.01 mol/L HCl aqueous solution for not less than four hours, followed by sufficient washing with ion exchange water. Then, the membrane, without being dried, was measured for its burst strength in accordance with JIS-P812 by using Mullen burst tester (manufactured by Toyo Seiki Seisakusho, Ltd.)

<Electric resistance>

The ion exchange membrane was sandwiched between two compartments of the cell with platinum black electrodes. On both sides of the ion exchange membrane, the compartments were filled with a 0.5 mol/L HCl aqueous solution, and the resistance between the electrodes at 25°C was measured with an AC bridge (frequency: 100 cycles/second) for comparison with the resistance between the electrodes when the ion exchange membrane was not placed. From the difference between these resistances, the membrane resistance ($\Omega \cdot cm^2$) was obtained.
The ion exchange membrane for use in this measurement was equilibrated in advance with a 0.5 mol/L HCl aqueous solution.

<Membrane thickness>

The ion exchange membrane was immersed in a 0.5 mol/L HCl aqueous solution for not less than four hours, and moisture on the membrane surface was removed with tissue paper. The thickness of the membrane was measured with a micrometer, MED-25PJ (manufactured by Mitutoyo Corporation).

<Water permeability>

The ion exchange membrane was sandwiched between cylindrical cells. 50 ml of water was put into the top of the cell, followed by applying a pressure of 0.1 MPa from above. The amount of water $W_{PW}$ permeating through the ion exchange membrane in one hour was measured and used to calculate water permeability according to Formula (4) below. The effective area of the membrane was 12.6 m$^2$.

$$\text{Water permeability } (\text{mL}/(\text{m}^2 \cdot \text{hr})) = W_{PW}/(S \times T) \quad \cdots \quad (4)$$

The parameters in Formula (4) are as follows:

S: Effective area (m$^2$) of membrane; and
T: Test time (hr).

<Ion exchange capacity and water content>

The ion exchange membrane was immersed in a 1 mol/L HCl aqueous solution for not less than 10 hours. Then, with a 1 mol/L $NaNO_3$ aqueous solution, chloride ions as counterions are replaced by nitrate ions, and the amount of free chloride ions was determined by using aqueous silver nitrate with a potentiometric titrator (COMTITE-900 manufactured by HIRANUMA Co., Ltd.) (The determined value is expressed as A mol.)
Next, the same ion exchange membrane was immersed in a 1 mol/L NaCl aqueous solution for not less than four hours, followed by sufficient washing with ion exchange water.
Moisture on the membrane surface was removed with tissue paper, and the mass W of the wet membrane was measured.
Further, the membrane was dried under reduced pressure at 60°C for five hours, and the weight D of the dried membrane was measured. Based on these measurement values, the ion exchange capacity and water content of the ion exchange membrane were respectively obtained by Formulas (5) and (6) below.

$$\text{Ion exchange capacity [meq/g - dry mass]} = A \times 1000/D \cdots (5)$$

$$\text{Water content (\%)} = 100 \times (W - D)/D \cdots (6)$$

<Method of calculating content of PVC>

The ion exchange membrane precursor and the backing material sheet were cut into 10 cm squares, followed by weighting. The content of PVC was calculated according to Formula (7) below.

$$\text{Content of PVC in ion exchange membrane [\%]} = T \times (M - B) \times 100 \cdots (7)$$

The parameters in Formula (7) are as follows:

M: Weight (g) of 10-cm square ion exchange precursor;
B: Weight (g) of 10-cm square backing material sheet; and
T: Proportion of PVC in polymerizable composition.

<Example 1>

A mixture was prepared in accordance with the following formulation:

50 parts by mass of styrene (St);
21 parts by mass of 57% divinylbenzene (DVB) (and ethylvinylbenzene as a remaining component);
29 parts by mass of 4-vinylpyridine; and
5.3 parts by mass of benzoyl peroxide (BW) (NYPER BW manufactured by NOF CORPORATION.)

To the thus-prepared mixture,
30 parts by mass of polyvinyl chloride powder (PQB-83) was added, thereby providing a uniform polymerizable composition.
Next, a high-density polyethylene monofilament woven fabric (PE-33D-120) was prepared as a polyolefin-based woven fabric.
The polymerizable composition obtained above was applied onto the high-density polyethylene monofilament woven fabric (PE-33D-120), which was then coated on both surfaces with a polyester film as a release material, followed by polymerization at 75°C for three hours.
Then, the resultant membrane-like polymer was immersed in 2 mol/L hydrochloric acid at 35°C for 23 hours, resulting in an anion exchange membrane with pyridinium. The configuration of the anion exchange membrane is shown in Table 1. The properties of the anion exchange membrane are shown in Table 2.

<Examples 2 to 3 and Comparative Examples 1 to 3>

An anion exchange membrane was prepared in the same manner as in Example 1, except that a mixture was prepared to contain the compounds in amounts as shown in Table 1 and that a backing material and a thickener as shown in Table 1 were used. The properties of the resultant anion exchange membrane are shown in Table 2.

[Table 1]

| | Backing material | Mixture (parts by mass) | Additive (parts by mass) | Content of PVC in membrane (mass%) |
|---|---|---|---|---|
| Example 1 | PE-33D-120 | St (50)<br>DVB (21)<br>4VP (29)<br>BW (5.3) | PQB-83 (30) | 15.4 |

(continued)

| | Backing material | Mixture (parts by mass) | Additive (parts by mass) | Content of PVC in membrane (mass%) |
|---|---|---|---|---|
| Comparative Example 1 | V-7275 | St (22.1)<br>DVB (33.5)<br>4VP (44.4)<br>BW (5.3) | NBR (5.5) | 0 |
| Example 2 | PE-33D-120 | St (50)<br>DVB (21)<br>4VP (29)<br>BW (5.3) | PQB-83 (35) | 17.5 |
| Comparative Example 2 | PE-33D-120 | St (50)<br>DVB (21)<br>4VP (29)<br>BW (5.3) | LE-1080 (35) | 16.8 |
| Comparative Example 3 | PE-33D-120 | St (50)<br>DVB (21)<br>4VP (29)<br>BW (5.3) | EA-209 (35) | 16.8 |
| Example 3 | PE-33D-120 | St (45.7)<br>DVB (19.3)<br>4VP (35)<br>BW (5.3) | P-22 (20)<br>H-NBR (3.3) | 11.1 |
| St: styrene<br>DVB: 57% divinylbenzene (and ethylvinylbenzene as a remaining component)<br>4VP: 4-vinylpyridine<br>BW: benzoyl peroxide (trade name: NYPER BW, manufactured by NOF CORPORATION.) | | | | |

[Table 2]

| | Example 1 | Comparative Example 1 | Example 2 | Comparative Example 2 | Comparative Example 3 | Example 3 |
|---|---|---|---|---|---|---|
| Thickness [$\mu$m] | 165 | 110 | 159 | 172 | 158 | 178 |
| Electric resistance [$\Omega\cdot cm^2$] | 4.5 | 1.9 | 4.5 | 2.5 | 3.5 | 1.9 |
| Ion exchange capacity [meq/g dry mass] | 1.0 | 1.4 | 1.0 | 1.0 | 1.0 | 1.4 |
| Water content [%] | 13 | 14 | 14 | 15 | 14 | 21 |
| Current efficiency [%] | 67 | 62 | 62 | 47 | 54 | 60 |
| Burst strength [MPa] | 1.1 | 0.3 | 1.2 | 1.0 | 1.0 | 1.1 |
| Shrinkage ratio [%] | 2.1 | 2.8 | 2.1 | 1.9 | 1.6 | 2.3 |
| Water permeability [mL/($m^2\times$hr)] | < 1000 | $\leq$ 1000 | $\leq$ 1000 | > 40000 | > 40000 | $\leq$ 1000 |

The membrane was treated with a 0.5 N HCl aqueous solution and immersed in pure water for three days, after which the shrinkage ratio of the membrane was measured (under conditions detailed in Examples). As is evident from Examples and Comparative Examples, the shrinkage ratio of the conventional 4VP-based anion exchange membrane (Comparative Example 1, using a backing material sheet of a polyvinyl chloride woven fabric and NBR as a

thickener) was 2.8%, while the shrinkage ratio of the 4VP-based anion exchange membranes of the present invention (Examples 1 to 3) was suppressed to approximately 2.1% to 2.3%. Further, the membranes of the present invention were excellent in both current efficiency and water permeability, with a current efficiency of more than 55% and a water permeability of less than 1,000 $ml/m^2 \cdot Hr$.

Although the membranes in Comparative Examples 2 and 3 produced by using polyethylene powder, instead of a vinyl chloride resin, as a thickener had a shrinkage ratio suppressed to as low as 1.6% to 1.9%, these membranes were inferior to those of the present invention in both current efficiency and water permeability, with a low current efficiency of 54% or less and a water permeability of more than 40,000 $ml/m^2 \cdot Hr$.

Explanations of Letters or Numerals:

1: 4VP-based anion exchange membrane
3: Anion exchange resin layer
5: Backing material sheet (polyethylene woven fabric)

## Claims

**1.** An anion exchange membrane comprising an anion exchange resin layer reinforced with a backing material sheet, wherein

the anion exchange resin layer includes an anion exchange resin that has as an anion exchange group a pyridinium group formed by protonation of a pyridyl group, and a vinyl chloride resin as a thickener, and
the backing material sheet is made of a polyethylene woven fabric.

**2.** The anion exchange membrane according to claim 1, wherein the vinyl chloride resin has an average degree of polymerization of 650 to 1200.

**3.** The anion exchange membrane according to claim 2, wherein the vinyl chloride resin is contained in an amount of 5 to 25 mass%.

**4.** The anion exchange membrane according to claim 1, wherein the backing material sheet of a polyethylene woven fabric has a thickness of 120 to 160 μm.

**5.** The anion exchange membrane according to claim 4, wherein the backing material sheet of a polyethylene woven fabric has an opening area of 35% to 55%.

**6.** The anion exchange membrane according to claim 1, having a shrinkage ratio of not more than 2.3% after being immersed in a 0.5 N HCl aqueous solution, followed by immersion in pure water for three days.

**7.** The anion exchange membrane according to claim 6, having a current efficiency of not less than 55% and a water permeability of less than 1000 $ml/m^2 \cdot Hr$.

**8.** A method for producing an anion exchange membrane, comprising the following steps:

a step of preparing a polymerizable composition containing 4-vinylpyridine as a monomeric component and a vinyl chloride resin as a thickener;
a step of forming a polymerizable sheet by impregnating a backing material sheet of a polyethylene woven fabric with the polymerizable composition;
a step of winding the polymerizable sheet overlaid with a release sheet on a roll;
a step of carrying out polymerization by heating the polymerizable sheet wound on the roll to obtain a polymer sheet;
a step of peeling the release sheet from the polymer sheet to obtain an ion exchange membrane precursor; and
a step of protonating a pyridyl group by immersing the ion exchange membrane precursor in an acid solution to obtain an anion exchange membrane.

**9.** The method for producing an anion exchange membrane according to claim 8, wherein the vinyl chloride resin is contained in the polymerizable composition so as to be present in the anion exchange membrane to be obtained in an amount of 5 to 25 mass%.

Fig. 1

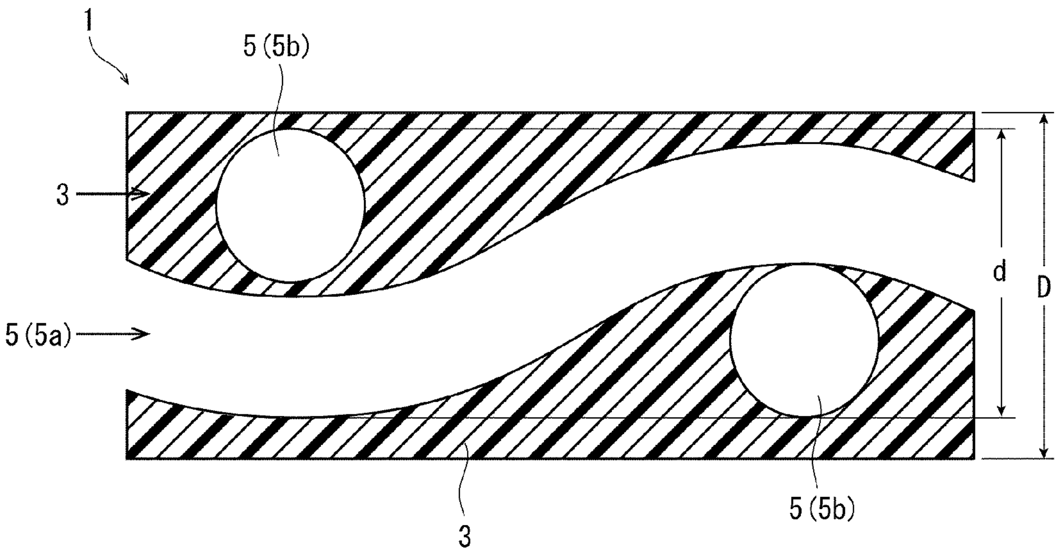

## INTERNATIONAL SEARCH REPORT

International application No.
**PCT/JP2021/048588**

**A. CLASSIFICATION OF SUBJECT MATTER**

***B01D 71/82***(2006.01)i; ***B01D 61/46***(2006.01)i; ***B01D 69/12***(2006.01)i; ***C08J 5/22***(2006.01)i
FI: B01D71/82; B01D61/46; B01D69/12; C08J5/22 CER; C08J5/22 104

According to International Patent Classification (IPC) or to both national classification and IPC

**B. FIELDS SEARCHED**

Minimum documentation searched (classification system followed by classification symbols)

B01D61/00-71/82, C08J5/22, B01J41/12-14, 47/12, C02F1/469

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 5-184877 A (ASAHI GLASS CO., LTD.) 27 July 1993 (1993-07-27) paragraph [0026] | 1-9 |
| Y | WO 2018/047700 A1 (ASUTOMU K..K.) 15 March 2018 (2018-03-15) paragraphs [0003]-[0072] | 1-9 |
| Y | JP 2018-127506 A (TOKUYAMA CORP.) 16 August 2018 (2018-08-16) paragraphs [0053]-[0068], fig. 1 | 8-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 March 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/048588**

| Patent document cited in search report | Publication date (day/month/year) | Patent family member(s) | Publication date (day/month/year) |
|---|---|---|---|
| JP 5-184877 A | 27 July 1993 | US 5397445 A<br>column 7, lines 23-33<br>EP 531999 A1 | |
| WO 2018/047700 A1 | 15 March 2018 | US 2019/0176098 A1<br>paragraphs [0003]-[0119]<br>US 2021/0187446 A1<br>EP 3511348 A1<br>CN 109641978 A<br>KR 10-2019-0053177 A | |
| JP 2018-127506 A | 16 August 2018 | WO 2016/204262 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5184877 A